# EUROPEAN PATENT APPLICATION

(11) **EP 3 599 798 A1**
(43) Date of publication of application: **29.01.2020**
(21) Application number: 19185882.8
(22) Date of filing: 11.07.2019
(51) Int. Cl.: H05B 39/04

(54) **DIMMER AND DIMMER DUTY CYCLE CONTROL**

(30) Priority: 28.07.2018 BE 201805545
(71) Applicant: Niko NV, 9100 Sint-Niklaas (BE)
(72) Inventor: DE BRABANDER, Gino, 9112 Sinaai (BE); DE BRABANDER, Peter, 9100 Nieuwkerken-Waas (BE)
(74) Representative: DenK iP

(57) **Abstract**

A dimmer (100) for providing controlled electric power to a load (202), a dimming method and a hardware related to the method are presented. The dimmer (100) comprises a dimming element (103) for regulating electric power to the load (202), between zero power and a full power value, a thermal sensor (108) for sensing a temperature at or near the dimming element (103), and controller (104) for controlling actuation of the dimming element (103) such that said dimming element (103) delivers a power of at most a pre-determined non-zero value, under the full power value, if the temperature sensed by the thermal sensor exceeds a predetermined threshold value. The dimmer (100) further comprises a power sensor comprising a voltage sensor (105) for sensing the voltage drop over the dimming element (103), and/or a current sensor (106) for sensing the current through the dimming element (103). The power sensor is adapted to provide information to the controller (104) regarding the full power available to the load (202) and its usage, for setting at least the maximum power available to the load (202). The controller (104) is configured for adapting the controlling of the actuation of the dimming element (103) based on a measurement signal obtained from the power sensor.

## Description

### Field of the invention

The present invention relates to the field of switches and control of light intensity. More specifically, it relates to dimmers and protection thereof.

### Background of the invention

Dimmers are relatively sensitive to temperature changes. If the temperature increases over a predetermined threshold for that dimmer, its electronics are under risk of damage. This problem is usually aggravated by the dimmer itself, because dimmers also dissipate heat, especially when the dimmer controls many bulbs and/or the bulbs have high power consumption or a power consumption different from the one specified for the dimmer.

The temperature increase is usually difficult to control. For example, a particularly warm day with no ventilation may present a risky situation. If the sun hits on a dimmer, its temperature may increase over the safe range during a few minutes, or a few hours on particular days, but not regularly, so malfunction is difficult to anticipate or assess.

In order to reduce heat build-up, several techniques can be used. For example, improved heat dissipation can be obtained, by using large conductive pieces as part of the box. The materials of the switch are usually plastic, with some metal pieces such as bridging plates for mounting frame covers; using a large plate can be done, but this constrains design and installation options. For example, this option limits the installation of a row of switches. Another option is using bulbs with low power, but then the maximum light output is reduced.

Other dimmers include safety functions that reduce the danger of overheating. If the temperature raises over a predetermined threshold, the dimmer and the lights are disconnected, for example by the use of a thermal switch such as a negative temperature coefficient (NTC) thermistor, which gives a signal that can be used to trigger disconnection, or by a thermal protection which directly disconnects the electric source. This interruption of functionality is usually confusing for a user, because it is not clear which problem occurred. Usually, expertise is required to provide functionality to the dimmer again. In some appliances, the correct functioning can only return when the temperature drops under a safe threshold.

In general, all these solutions present inconveniences for a user.

US2011316429A1 discloses a lamp system with dimming means with a temperature sensor, from which signals are generated when ambient temperature is over a predetermined safety value. In response to the signals, a trigger pulse is sent to control the percentage of current that flows to the lamp. However, the dimmer can handle well a specific maximum power. If a load is connected to the dimmer such that the maximum power is surpassed, the performance of the dimmer is reduced and more heat may be generated, potentially also reducing the useful life of the dimmer or the load.

In US20140203709 a semiconductor chip including a LED driver circuit is disclosed. The LED driver circuit is operably coupled to at least one LED and configured to supply a load current to the at least one LED such that an average load current matches a desired current level defined by a drive signal. A temperature measurement circuit is configured to generate, as drive signal, a temperature dependent signal in such a manner that the drive signal is approximately at a higher constant level for temperatures below a first temperature, is approximately at a lower constant level for temperatures above a second temperature but below a maximum temperature, and continuously drops from the higher constant level to the lower constant level for temperatures rising from the first temperature to the second temperature.

### Summary of the invention

It is an object of embodiments of the present invention to provide an effective and reliable light dimmer, and a corresponding dimming method, even under overheating and/or overload conditions. It is a further object to provide a processing unit capable of performing the method.

In a first aspect, the present invention provides a dimmer for providing controlled electric power to a load, the dimmer comprising:
- a dimming element for regulating electric power to be provided to the load, between zero power and a full power value,
- a thermal sensor for sensing a temperature at or near the dimming element,
- a controller for controlling actuation of the dimming element.

The controller is configured for adapting the controlling of the actuation of the dimming element such that said dimming element delivers a power of at most a pre-determined non-zero value, strictly under the full power value, if the temperature sensed by the thermal sensor exceeds a pre-determined threshold value.

It is an advantage of embodiments of the present invention that protection of the dimmer is obtained while keeping functionality of the dimmer by allowing an amount of power through the dimming element, which is lower than the full-on status, e.g. lower than the power for the full-on cycle.

In some embodiment of the present invention, the dimmer further comprises a processing unit adapted for steering the controller based on a temperature measurement signal of the thermal sensor.

The dimmer further comprises a power sensor. The power sensor may comprise a voltage sensor for sensing the voltage drop over the dimming element, and/or a current sensor for sensing the current through the dimming element. The controller is configured for adapting the controlling of the actuation of the dimming element based on a measured voltage drop over the dimming element and/or on a sensed current through the dimming element.

The power sensor is adapted to provide information to the controller regarding the power available to the load and its usage, for setting at least the maximum power available to the load. It is an advantage of embodiments of the present invention that the maximum power available to the dimmer is adjustable, in accordance with the detected load, with no need to determine the type of load in beforehand.

It is a further advantage of embodiments of the present invention that a wide range of loads can be used with no risk of overheating, because the activation regime of the dimming element can be adapted with the load used.

It is an advantage of embodiments of the present invention that the voltage and the current can be measured independently, and peaks or surges can be detected as well as steady state conditions of the load, supply, ground, etc.

The safe ranges of temperature and power level, current and voltage by measuring and monitoring the voltage and the current can be determined by the processing unit, for example.

In some embodiment of the present invention, the dimmer further comprises means of notification for alerting a user when temperature, current and/or voltage measurements at the dimming element exceed a threshold signal.

It is an advantage of embodiments of the present invention that a user can be notified of overload or overheating conditions of the dimmer.

In some embodiment of the present invention, the dimmer further comprises a contact for connecting a neutral line, for providing energy to at least the means of notification.

It is an advantage of embodiments of the present invention that the dimmer has functionality, even in absence of load.

In some embodiment of the present invention, the means of notification are powered by a powering unit integrated with the dimmer.

It is an advantage of embodiments of the present invention that the dimmer has functionality and safety mechanisms such as notification means will work even if there is no load, even if the dimmer includes only two contacts (for the power line and for the load only).

In some embodiment of the present invention, the thermal sensor is arranged to measure temperature of the dimming element.

It is an advantage of embodiments of the present invention that overheating of the dimming element, e.g. switch or transistor, can be monitored.

In some embodiment of the present invention, the thermal sensor is alternatively or additionally arranged to measure ambient temperature.

It is an advantage of embodiments of the present invention that overheating due to external thermal sources can be monitored.

In some embodiments, more than one thermal sensor is included, for sensing temperatures in different areas of or around the dimmer.

In some embodiment of the present invention, the dimming element includes a switch adapted for providing signal modulation.

In some embodiment of the present invention including a processing unit, the controller and the processing unit are integrated in a single module.

It is an advantage of embodiments of the present invention that a compact device can be obtained.

In a second aspect, the present invention provides a method of driving a dimmer for regulating electric power, between zero power and a full power value, to be provided to a load. The method includes:
- obtaining a temperature measurement at or near the dimmer,
- comparing the temperature measurement with a threshold value,
- limiting the power regulated by the dimmer to a predetermined non-zero value strictly under the full power value obtainable by the dimmer, while the dimmer is being driven, if the temperature measurement exceeds the threshold voltage.

The method further comprises sensing the voltage drop over the dimming element and/or sensing the current through the dimming element, and adapting the power available to the load, e.g. the maximum power available to the load, and its usage.

It is an advantage of embodiments of the present invention that protection against overheating is obtained for a dimmer, while providing powering to a load.

In some embodiment of the present invention, the method further comprises the step of obtaining a measurement of the power regulated by a dimming element forming part of the dimmer, by measuring a voltage drop over the dimming element and/or a current flow through the dimming element, and the step of comparing a combination of measured temperature and power conditions with a predetermined list of safe thresholds of temperature and power conditions, and limiting the power regulated by the dimmer to a predetermined non-zero value strictly under the full power value obtainable by the dimmer if the combination of measured temperature and power conditions is identified to exceed a safe threshold.

It is an advantage of embodiments of the present invention that voltage and current can be taken into account for obtaining the operation point and allowing a more accurate setting of the power available to control or the power fixed. Additionally, by measuring current and voltage independently, peaks or surges can be detected as well as steady state conditions of the load, supply, ground, etc.

In some embodiment of the present invention, limiting the power regulated by the dimmer to a predetermined non-zero value (strictly under the full power value obtainable by the dimmer) further comprises setting a fixed power (e.g. a fixed duty cycle which provides such fixed power). Alternatively, it comprises allowing a user to set a dimming duty cycle within a range between zero value of the power and the predetermined non-zero value of the power.

It is an advantage of embodiments of the present invention that dimming functionality is kept.

In some embodiment of the present invention, the method further comprises notifying a user that the temperature threshold value has been surpassed and/or that the power has been limited.

It is an advantage of embodiments of the present invention that a user can be updated of the status of the dimmer.

In a further aspect, the present invention provides a controller adapted to carry out the method of the second aspect when implemented in the dimmer of the first aspect.

In yet a further aspect, the present invention provides a processing unit programmed to carry out the method of the second aspect, for steering a controller implemented in the dimmer of the first aspect of the present invention. Both processing unit and controller may be integrated in a single module.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG 1 and FIG 2 illustrate two embodiments of a device in accordance with embodiments of the present invention.
FIG 3 is a flowchart with the steps and optional steps of a method in accordance with embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but the invention is not limited thereto but only by the claims. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "dimmer", reference is made to a device used to switch an electric light source on and off, and further to control the illumination, either manually, wirelessly, by programming the control, etc. It usually includes an electric regulator, which allows controlling the amount of power through the light source, also known as "load".

Where in embodiments of the present invention reference is made to "dimming element", reference is made to said regulator for adjusting the powering of a light source, so the brightness (or illumination) provided by the light source can be lowered or increased. The regulator may be for example a voltage or current regulator, or a modulator, such as a pulse width modulator, e.g. comprising a switch such as a semiconductor switch connected to a controller. For example the dimming element may comprise a MOSFET, IGBT, triac, etc.

Thus, in what follows, a dimming element is part of a dimmer, and the dimmer may include further elements such as drivers, interfaces for brightness selection, contacts to connect the dimmer to power lines and light sources, etc.

Dimmers are sensitive to heat. Existing dimmers dissipate heat, and the amount of heat may produce malfunctions in cases of overload, because overload usually brings an increased heat dissipation. Although this can be taken into account during installation (by reducing the power and/or number of loads controlled by the dimmer), this option is not always followed by the end user, or in some situations it is not available. Moreover, such reduced number or power of light sources may not meet the requirements of the end user. Additionally, dimmers are also susceptible to heat from external sources, which is more difficult to take into account because these may change with seasons, with ventilation, and even during the day, e.g. in case of sunlight incidence.

The present invention provides detection of overheating and/or overloading, by detection of the temperature and, optionally, of the power consumption. It also provides adaptation of the power available for the load, for example by reducing the maximum value of the power available to the load if a predetermined temperature is surpassed. Thus, in case of overheating or overload, the power can be automatically regulated and turned down, without interrupting completely the electrical path between the source (or mains) and the load, so there is still illumination. In other words, the present invention provides a method and device which deals with overheating by adjusting and/or tuning down the maximum power manageable by the dimming element to a safe range, instead of cutting the current completely through the load (e.g. a bulb) until the temperature enters an acceptable range of values. Overheating is reduced, and damages to the electronics in the dimmer (e.g. semiconductors, for example semiconductors included in the dimming element) are reduced, while the light source still provides illumination.

The present invention may also preserve dimming functionality, so even if the device suffers from overheating or overload, at least a range of dimming control is available to the end user, e.g. a reduced range of dimming control, compared to the range with no overheating or overload. To that end, the present invention provides adjustable power to the load by the dimming element in accordance with the amount specified by the user, but within a range and maximum value of power set by a controller. The values are set by the controller taking into account the temperature, voltage across the dimming element and current through the dimming element, so the dimming element is operable within a safe margin.

Processing of the measurements, and/or adaptation of the maximum load, and/or adaptation of dimming range, can be made by means of an algorithm, and/or lookup tables, which compare the power usage and the temperature and provide a safe dimming range. Such algorithm and tables can be implemented in a memory, processing unit, controller, or the like.

In a first aspect, the present invention relates to a dimmer which includes means for turning on or off the power through a load upon request of a user, and means for limiting or partially reducing the power through the load in case of overload and/or overheating without automatically cutting the power.

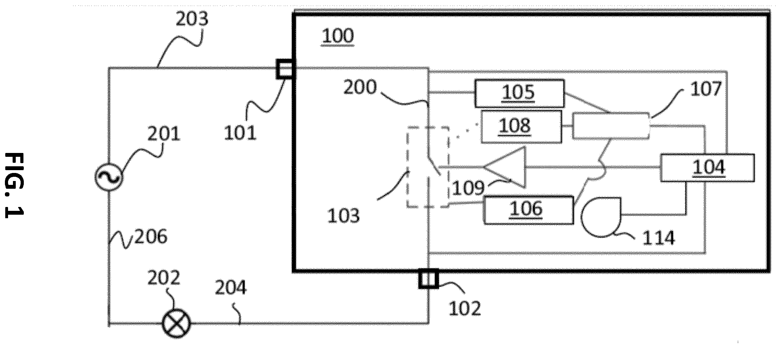

FIG 1 shows a dimmer 100 including a conductor 200 such as a wire or the like, between electric contacts 101, 102 for connecting the dimmer between a power supply 201 and a load 202. For example, the dimmer 100 may include at least one first contact 101 for connecting to at least a power line 203 (e.g. mains), and at least one second contact 102 for connection to a line 204, e.g. switched line (such as a wire) connected to a load 202.

In operation, a neutral line 206 is coupled between the power supply 201 and the load 202, to close the circuit.

The present invention can be used with any suitable load 202, e.g. resistive, inductive, capacitive loads, etc. A load 202 may include a light source, or a plurality thereof, in series or in parallel. For example, a light source or plurality thereof may comprise a bulb such as an incandescent bulb, or a fluorescent lamp such as a compact fluorescent lamp (CFL), or a LED, etc., or any combinations thereof as long as the light source is compatible with the dimmer.

In embodiments of the present invention, the dimmer 100 may drive loads which present a wide range of power consumption.

The dimmer 100 includes a dimming element 103. In particular embodiments, the dimming element 103 may be a switch, for example a voltage-driven switch. The dimming element 103 may include semiconductor devices, such as a MOSFET, triac, diac, transistors, etc. as part of the dimming element, especially those with good thermal behavior (low losses) such as the MOSFET types.

Embodiments of the present invention may include any suitable type of modulation or regulation for dimming. For example, the dimming element may be configured for phase cut dimming. However, the present invention is not limited to this, and other types of dimming can be used, for example low voltage PWM dimming, e.g. for dimming of LED stripes.

The actuation of the dimming element 103 is performed by a controller 104, such as a microcontroller. In some embodiments of the present invention, the controller 104 provides a variable signal (e.g. voltage) to the dimming element 103, e.g. to a switch acting as dimming element 103 (e.g. a voltage-driven switch, such as a triac). The variable signal may be obtained via pulse width modulation, or by any other suitable means.

In normal operation, the controller 104 adjusts the actuation of the dimming element 103 (e.g. the modulation of the switch) in accordance with the dimming value set by a user, for example via a user interface 114 e.g. a knob, a touchpad, even a wireless receptor linked to a remote selector, such as a mobile device including an application for selecting the dimming value. The dimming value sets a duty cycle which provides power to the load between a full power value (highest conduction attainable through the dimming element) and a zero value (no power provided to the load).

The dimmer 100 in accordance with embodiments of the present invention includes a thermal sensor 108. The thermal sensor 108 may measure the temperature of the dimming element 103, thus obtaining the power dissipation thereof, and/or the temperature of the surroundings of the dimmer 100 or of the surroundings of the dimming element 103, thus detecting possible increase of temperature or overheating due to external heat sources, e.g. the sun.

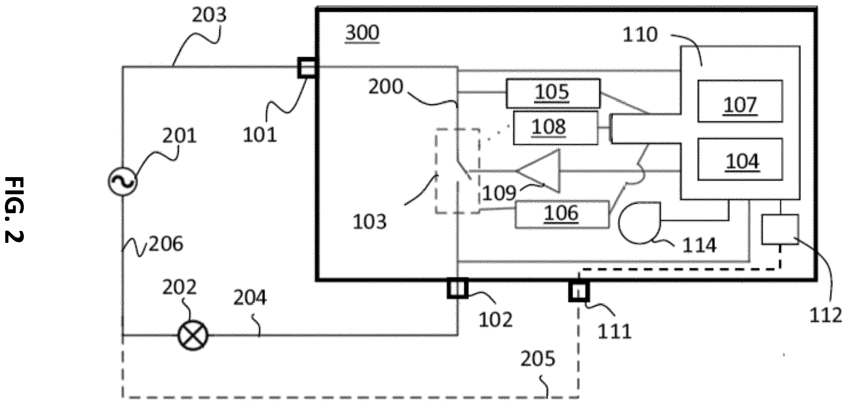

The measurements of the thermal sensor 108 can be used to trigger the controller to reduce or limit the duty cycle, if the sensed temperature surpasses a predetermined threshold, while still allowing delivering power to the load. The controller may be adapted to perform the comparison. In some embodiments, the measurements of the thermal sensor 108 are read by a processing unit 107, which may store tables and algorithms used in determining, based on the measurements of the thermal sensor, a signal sent to the controller 104 for adapting the control of the dimming element 103. The processing unit 107 may be included as a separate module, possibly in a separate housing, or it may be included in the dimmer 100 as in the embodiment illustrated in FIG 1, or it may be connected to, combined with and/or integrated with the controller 104 in a module, as will be shown in FIG 2.

The thermal sensor 108 may measure the environmental temperature surrounding the dimmer 100, and/or the temperature of the dimming element 103, and/or the temperature of the conductor 200. In some embodiments, combinations of those temperatures can be monitored (e.g. by including two or more thermal sensors). The signal corresponding to the thermal measurement(s) can be sent to the processing unit 107, so the dimming level can be adapted (as well as the power level available) in accordance with the temperature, thus reducing the chances of damage by overheating.

When the measured temperature surpasses a predetermined threshold, in particular embodiments of the present invention, the dimming level can for instance be reduced by setting the duty cycle of the dimming element 103 to a predetermined value, thus not allowing duty cycles exceeding the predetermined value. This way, the illumination and the total power through the load are limited. For example, the duty cycle may be set to a conduction angle of 120° or more, for example 135°.This adaptation of the dimming level can be done, following an algorithm, by the processing unit 107, which may set the controller 104 to steer the dimming element 103 with the predetermined duty cycle. Thus, the controller 104 is programmed by the processing unit 107. Lookup tables, memory modules and the like may also be included. In some embodiments, this predetermined duty cycle is fixed. In case of overheating, for example, the controller 104 or processing unit 107 may include instructions to set a fixed duty cycle, which may be set as a low illumination setting (thus providing a fixed non-zero power value, but under the full power value attainable in normal conditions, e.g. full -on power). The only control allowed in this case by the dimmer 100 of the present embodiment is turning off the light, but if turned on, the illumination is constant and the dimming does not respond. Because the dimmer 100 still functions, albeit in a limited way (e.g. as a normal on/off switch with low light intensity when being on), this has the advantage that the user can detect easily and unmistakably that there is a problem in the dimmer 100, rather than in the light source or, in general the load 202, or in the electric network.

In other embodiments, dimming functionality may still be provided, and the duty cycle can still be varied by a user by setting the controller, but respecting the limits imposed by the processing unit. This allows a user to change the power value provided to a load, but limited between a zero value (no power) and a non-zero value strictly under the full power value.

The dimmer 100 not only includes a thermal sensor 108, but also includes a power sensor. For example, it may include a voltage sensor 105 and/or a current sensor 106.

The voltage sensor 105 may for instance be an integrated voltage sensor. The voltage sensor 105 samples the voltage provided by the power supply 201 (for example by measuring the voltage drop along the dimming element 103, or measuring the drop with respect to the ground reference, which is easier and less costly to implement). The exact voltage can be monitored, and voltage peaks, deterioration of grounding, etc. can be detected.

The current sensor 106 may sense the current flowing through the conductor 200, crossing the dimming element 103. As before, the current sensor 106 may be integrated. Transients and the like can be detected.

The processing unit 107 may retrieve and process the measurements from the voltage and/or current sensors 105, 106 as well as of the thermal sensor 108.

The current sensor 106 in combination with the voltage sensor 105 gives additional information regarding the actual power through the dimming element 103.

Measuring both voltage over and current through the dimming element 103 gives information regarding the power available to the load 202 and its usage, with no need to determine the type of load in beforehand. The processing unit 107 may determine the safe ranges of temperature and power level, current and voltage by measuring and monitoring the voltage and the current.

In some embodiments of the present invention, only one of the current or voltage sensors 106, 105 are used, assuming a value (e.g. by calculations or the like) for the parameter not sensed. For example, in some embodiments a current sensor 106 is used but not a voltage sensor, and it is assumed that the voltage of the power line 203 is a fixed voltage (e.g. to 230 V), which saves space and simplifies the configuration and manufacture of the dimmer. In many cases, the reduction of accuracy is acceptable because the voltage (or current) of the power line 203 can be considered sufficiently stable.

The power level is obtained from the measurements by the processing unit 107. For a particular dimming level set by a user, the processing unit 107 can adjust control of the dimming element 103 (e.g. the activation of the switch) and therefore the power used, in accordance with the measurement of the power available, with no need to program, to determine or to specify the load 202 before installation. The dimmer 100 can be used with most light sources, and the specified range of power of the load or loads 202 can be much wider. Rather than adapting the load 202 in accordance with the power provided by the dimmer 100, in accordance with embodiments of the present invention the dimmer dynamically adapts to the conditions of power and load available.

Combining the results of the temperature sensing with the results of the power sensing provides the advantage that, although the detection of temperature is sometimes slow, thanks to the power sensing, the present invention provides monitorization of steady state load conditions, and also of transient conditions. The duty cycle can already be adapted immediately when overload is detected, even before overheating takes place.

Thus, the dimmer 100 can measure, process and control the power available to the load 202 via the dimming element 103, for example the maximum power available depending on the load type and temperature (e.g. temperature of the dimming element, or environmental temperature, or both). The system measures the load and temperature continuously and regulates the dimming level (e.g. the duty-cycle of the switch) accordingly, taking into account also the level set by the user. The load is measured by analysis of voltage, current and temperature. As long as there is no fault condition (no overheating, no voltage spikes, etc.), the user has full control and any duty cycle allowed by the controller can be set between the widest range available to the controller, for example full-on (allowing maximum power through the load) or zero (no power, for example if a dimming element is a switch, the switch is set in an open state). This is allowed as long as the detected temperature is under a threshold, for the power (or current or voltage) measured by the sensors.

When one or more sensors 108, 105, 106 detect rise of temperature, overheating and/or overload (e.g. a transient overload condition), the algorithm executed in the processing unit 107 may assign a predetermined dimming level to the dimming element 103; for example a predetermined duty cycle may be established. This predetermined duty cycle may not allow powering over a predetermined safe threshold. For example, full cycle powering (or constant "on" condition, providing full power value, or maximum conduction through the dimming element) may not be allowed, and light sources may only be functioning at limited intensity.

Existing dimmers usually have an optimal value of the power of a load at which the dimmer is intended to perform, and using a different load (different number of light sources, or light sources using higher power than specified) usually results in a less optimal dimming and overheating. Dimmers 100 in accordance with embodiments of the present invention allow a wide range of loads 202 to be used. In embodiments of the present invention, the dimming element 103 and its related circuitry 109 (such as amplifiers, etc.) can accept a wide range of loads with no risk of overheating, because the processing unit 107, upon sensing the temperature, and also the voltage and/or current utilized, can adapt the activation regime of the dimming element 103. For example a limit can be set for the power utilized when the controller 104 requests maximum power, and/or the dimming range can be set, via the controller 104, to a dimming range adapted to the load 202 present on the line 204, so no overheating occurs, but illumination can still be provided.

As seen before, the predetermined duty cycle may be fixed, thus fixing a dimming level, but it may be chosen in accordance with the load, as detected by the power sensor. In alternative embodiments, dimming functionality is preserved, albeit in a more restricted way, for example not allowing to reach the high end of the power consumption to the load 202. This way, thermal build-up is restricted, and damages to the circuitry are reduced or avoided. Dimming functionality can return to normal, e.g. allowing the whole predetermined range rather than the restricted range, when the sensed conditions are within the safe conditions as stored in the processing unit (e.g. a lookup table therein). For example, even if there are overheating conditions, the user still can enjoy dimming in a safe way, and then the dimming range can return to normal when the overheating conditions stop and e.g. temperature is reduced.

In some embodiments, means of notification is provided in the dimmer 100, so the user can become aware of the status of the dimmer, particularly whether there is overload and/or overheating.

FIG 2 shows a dimmer 300 in accordance with embodiments of the present invention, including a means 112 of notification. Reference numbers in FIG 2 which are equal to reference numbers in FIG 1 refer to same or similar device features, which are not necessarily explained in as many detail hereinbelow as they have been hereinabove. Nevertheless, the description of these features given with reference to FIG 1 also holds for FIG 2.

Contrary to the dimmer 100 of the embodiment illustrated in FIG 1, the dimmer 300 of the embodiment illustrated in FIG 2 includes a module 110 which integrates the processing unit 107 and the controller 104 for controlling the dimming element 103.

The processing unit 107 or, in this case, the module 110, may be adapted to activate the means 112 of notification, for example if overheating is detected and/or if overload is detected, and/or if deterioration of the power, voltage or current characteristics is measured. In particular, the means 112 of notification may notify a user if the dimming duty cycle has been adapted to new conditions to reduce or avoid overheating.

The means 112 of notification may include alarms, e.g. an acoustic alarm, and/or an optical alarm, e.g. a LED which sends visual notifications. For example, a LED which glows when the power supply and the lamp are switched on, but when overheating is detected, or fixed or reduced duty cycle is active, the LED changes colour, blinks, etc.

Additionally or alternatively, the means 112 of notification may include a transmitter, for example a transmitter that sends an alert to a remote unit, such as an external maintenance service and/or to a mobile device.

In some embodiments, the dimmer 300 may include an internal power source (not illustrated), such as a battery, so parts of the dimmer 300 (e.g. sensor 106, 105, 108, processing unit 107, means 112 of notification) can still be active even if the dimmer 300 is not powered. This can be used for example for activating the means 112 of notification in a two-terminal dimmer, e.g. a dimmer with two contacts 101, 102 which usually cannot be powered if the conductor or line 204 is not connected, for example if no load 202 is connected. The use of internal power source may still allow functioning of sensors or notably the alarms and means of notification even if the load 202 is damaged or is being interchanged.

Additionally or alternatively to an internal power source, in FIG 2, a third contact 111 is shown besides the other two contacts 101, 102. The third contact 111 may serve to connect to a wire or power line (e.g. neutral line) 205. Thus, internal powering of some elements of the dimmer 300, such as processing unit 107 or module 110 or the like, and/or the means 112 of notification as shown in FIG 2, can be provided. This configuration does not require change of batteries.

Other features can be included in the dimmer 300, for example features to reduce or suppress buzzing, e.g. interference capacitors, inductor chokes, etc.

In summary, embodiments of the first aspect of the present invention provide a protection system for a dimmer 100, 300 including thermal sensor 108, and optionally also voltage and current sensor 105, 106, and further including a processing unit 107 which is programmed to set, based on the measurements obtained by the one or more sensors 105, 106, 108, the maximum available power for the load 202. The load 202 is either powered by the fixed value, or the power of the load 202 may be variable between the maximum available power and zero power, which can be set by a user.

In a second aspect, the present invention provides a method of driving a dimmer 100, 300, which includes detecting the temperature and comparing it to a threshold value, and where the measurement surpasses the threshold value, the power available to the load 202 is set to a limited value, so the dimming element 103 does not overheat. The set value is non-zero, so illumination is still provided.

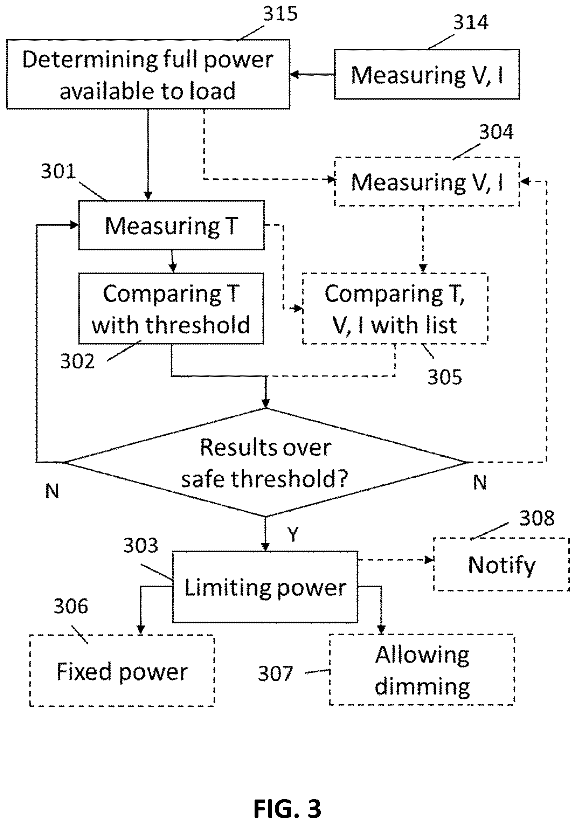

FIG 3 is a flowchart of a method in accordance with embodiments of the present invention, showing optional steps as dashed lines and boxes. A temperature is measured 301, for example the temperature of the dimming element 103 for detecting overheating (of the switch or transistor), and/or the temperature surrounding the dimmer 100, 300. This allows detecting overheating due to external sources (such as sunlight). The measurement is compared 302 with a threshold value, and if the comparison result surpasses a safe threshold, the dimming levels available to the dimmer 100, 300 are reduced or limited 303, thus reducing the power output, but power to the load 202 is not completely removed. The power is controlled by, for example, controlling the duty cycle of the dimming element 103. Duty cycles with great thermal burden will not be allowed. For example, the powering may be fixed 306, e.g. by fixing a predetermined duty cycle. In other embodiments, the dimming level available to the dimmer 100, 300 is set so as to be below the maximum possible dimming level; however, a still lower power can be still requested by the user by a (e.g. lower) dimming level, so dimming is allowed 307, but only up to the maximum available dimming level. For example, a predetermined duty cycle can be set, and other duty cycles with lower thermal burden can be adjusted by a user.

For example, a value of temperature of 100°C and power of 300 W may be used as thresholds. Measurements may be continuously done, and the results can be checked with these thresholds. If any or both thresholds are exceeded, the duty cycle is lowered. The lowest duty cycle that still provides power can be set during installation, for example.

In some embodiments, notification 308 is also provided, for example by activating an alarm, optical signal, or even message transmission (e.g. to a mobile device).

In some embodiments, notification is implicit by reducing the duty cycle.

In some embodiments, on top of the temperature measurement, the power available to the load 202 is measured. For example, voltage and/or current can be measured 304, 314 at the dimming element 103 (for example, the voltage at a first contact 101 to a supply, and the current through the dimming element 103).

This power information can be used to obtain information related to the load 202. The full power available to the load can be adapted 315 from the power measurement to set the maximum power available to the load, with no need to pre-program the dimmer by the user. The duty cycles available to the dimming element 103 (e.g. provided by the controller 104) can be tailored 315 to the type of load measured. Moreover, the results of current and/or voltage, together with the temperature, set an operation point which can be compared 305 with a list of operation points, for a set of voltages, currents, power values and temperatures.

If a current peak, or external overheating, or damaged load or the like is detected (by sudden variation of voltage with slow increase of temperature, for example), the comparison 302, 305 with the list of operation points may determine that the safe threshold will be or is being surpassed. Then, more concrete values of power values (e.g. duty cycles available for a controller to control the activation of the dimming element) can be set. As before, the dimmer 100, 300 may be fixed to a single power value, behaving as a normal, non-dimmable, light switch, or dimming functionalities can still be allowed, but at a narrower range of dimming, as some duty cycles are not allowed, and not available for the controller 104, by the processing unit 107.

In some embodiments, once the conditions change and become safer, other power values may become allowed again. For example, if the temperature drops, the dimming range may be increased, by allowing more duty cycles available to the controller 104, and hence available for the user to adjust powering of the load 202, and thus illumination.

The present invention can be used in the case of flush mounting of dimmers in which two dimmers A and B or more are flush mounted next to each other. The temperature of the dimmers will influence each other. For example, if dimmer A is activated, it will influence the temperature of the dimmer B, and thus it will influence the duty cycle of the dimmer B, and vice-versa. Load limits are given as instructions to the user, often in the dimmer itself, but the limits are not always followed by the user. In such cases, using dimmers 100, 300 in accordance with embodiments of the present invention limits the influence of temperature between each other and reduce malfunctions on the dimmers.

If a user overloads the dimmer, for example by using a load with a power consumption larger than the specified for the dimmer (or a number of loads resulting in such power consumption), the dimmer in accordance with the present invention will set a maximum duty cycle value attainable by the dimmer which is lower than the duty cycle that provides full power. For example, the conduction time may be limited from 9 ms to 7 ms, so the load can be powered, and the user has always light with reduced or no overheating. The dimmer does not turn off the load by setting the power to zero, interrupting or breaking the electrical path between source and load every time there is overheating, until the temperature is reduced or the user or installer resets the dimmer. In this case the overheating is reduced and, in case of overheating, the operation point can be determined and the duty cycle may become even more limited, but still functional.

In a third aspect, a controller 104 is provided, which is adapted to set the duty cycle of a dimming element according to the instructions of a user. The user can adjust the power value of the load 202, for example by adjusting the dimming level of the illumination provided by the load. The controller 104 is further adapted (for example, programmed) to limit the duty cycle to a predetermined safe cycle when included in a dimmer in accordance with embodiments of the first aspect of the present invention, so as to provide a non-zero power value to a load, but lower than the full on power value, in accordance with embodiments of the second aspect of the present invention.

In a fourth aspect, a processing unit 107 is provided, which may set the power levels, e.g. duty cycles, available to a controller 104 for regulating the power of a load 202 (e.g. controlling the dimming of a light source). The processing unit 107 comprises instructions to carry out the steps of the method of the second aspect of the present invention, when included in a device in accordance with embodiments of the first aspect of the present invention.

The processing unit 107 may be included in an integrated module 110, for example including the controller 104, internal powering, etc.

## Claims

1. A dimmer (100, 300) for providing controlled electric power to a load (202), the dimmer comprising:
- a dimming element (103) for regulating electric power to be provided to the load (202), between zero power and a full power value,
- a thermal sensor (108) for sensing a temperature at or near the dimming element (103),
- a controller (104) for controlling actuation of the dimming element (103) such that said dimming element (103) delivers a power of at most a pre-determined non-zero value, under the full power value, if the temperature sensed by the thermal sensor (108) exceeds a pre-determined threshold value,
**characterized in that** the dimmer further comprises a power sensor comprising:
- a voltage sensor (105) for sensing the voltage drop over the dimming element (103), and/or
- a current sensor (106) for sensing the current through the dimming element (103), wherein the power sensor is adapted to provide information to the controller (104) regarding the full power available to the load (202) and its usage, for setting at least the maximum power available to the load (202),
and wherein the controller (104) is configured for adapting the controlling of the actuation of the dimming element (103) based on a measured voltage drop over the dimming element (103) and/or on a sensed current through the dimming element (103).

2. The dimmer (100, 300) in accordance with claim 1, further comprising a processing unit (107) adapted for steering the controller (104) based on a temperature measurement signal of the thermal sensor (108).

3. The dimmer (100, 300) in accordance with any of the previous claims, further comprising means (112) of notification for alerting a user when temperature, current and/or voltage measurements at the dimming element (103) exceed a threshold signal.

4. The dimmer (100, 300) in accordance with claim 3, further comprising a contact (111) for connecting a neutral line, for providing energy to at least the means (112) of notification.

5. The dimmer (100, 300) in accordance with claims 3 or 4, wherein the means (112) of notification are powered by a powering unit integrated with the dimmer (100, 300).

6. The dimmer (100, 300) in accordance with any one of the previous claims, wherein the thermal sensor (108) is arranged to measure temperature of the dimming element (103).

7. The dimmer (100, 300) in accordance with any one of the previous claims, wherein the thermal sensor (108) is arranged to measure ambient temperature.

8. The dimmer (100, 300) in accordance with any one of the previous claims, wherein the dimming element (103) includes a switch adapted for providing signal modulation.

9. The dimmer (100, 300) in accordance with any of claims 2 to 8, wherein the controller (104) and the processing unit (107) are integrated in a single module (110).

10. A method of driving a dimmer (100, 300) for regulating electric power, between zero power and a full power value, to be provided to a load (202), the method including
- obtaining (301) a temperature measurement at or near the dimmer (100, 300),
- comparing (302) the temperature measurement with a threshold value,
- limiting (303) the power regulated by the dimmer (100, 300) to a predetermined non-zero value strictly under the full power value obtainable by the dimmer (100, 300), while the dimmer (100, 300) is being driven, if the temperature measurement exceeds the threshold voltage,
wherein the method further comprises sensing (314) the voltage drop over the dimming element (103) and/or sensing (314) the current through the dimming element,
and adapting (315) the full power available to the load (202) and its usage, for setting at least the maximum power available to the load (202).

11. The method in accordance with claim 10, further comprising
obtaining (304) a measurement of the power regulated by a dimming element (103) forming part of the dimmer (100, 300), by measuring a voltage drop over the dimming element (103) and/or a current flow through the dimming element (103),
comparing (305) a combination of measured temperature and power conditions with a predetermined list of safe thresholds of temperature and power conditions, and limiting (303) the power regulated by the dimmer (100, 300) to a predetermined non-zero value strictly under the full power value obtainable by the dimmer (100, 300) if the combination of measured temperature and power conditions is identified to exceed a safe threshold.

12. The method in accordance with any one of claims 10 or 11, wherein limiting the power regulated by the dimmer (100, 300) to a predetermined non-zero value strictly under the full power value obtainable by the dimmer (100, 300) comprises setting a fixed power (306) or allowing (307) a user to set a dimming duty cycle within a range between zero value of the power and the predetermined non-zero value of the power.

13. The method in accordance with any one of claims 10 to 12, further comprising notifying (308) a user that the temperature threshold value has been surpassed and/or that the power has been limited.

14. A controller (104) programmed to carry out the method of any of claims 10 to 13, when implemented in the dimmer (100, 300) of any of claims 1 to 9.
